(19) **Europäisches Patentamt / European Patent Office / Office européen des brevets**

(11) **EP 4 350 468 B1**

(12) **FASCICULE DE BREVET EUROPÉEN**

(45) Date de publication et mention de la délivrance du brevet:
**27.05.2026 Bulletin 2026/22**

(21) Numéro de dépôt: **23198951.8**

(22) Date de dépôt: **22.09.2023**

(51) Classification Internationale des Brevets (IPC):
***G05F 1/59*** *(2006.01)*

(52) Classification Coopérative des Brevets (CPC):
**G05F 1/59**

(54) **DISPOSITIF ÉLECTRONIQUE**

**ELEKTRONISCHE VORRICHTUNG**

**ELECTRONIC DEVICE**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.10.2022 FR 2210179**

(43) Date de publication de la demande:
**10.04.2024 Bulletin 2024/15**

(73) Titulaire: **STMicroelectronics (ALPS) SAS**
**38000 Grenoble (FR)**

(72) Inventeur: **PONS, Alexandre**
**38220 VIZILLE (FR)**

(74) Mandataire: **Cabinet Beaumont**
**4, Place Robert Schuman**
**B.P. 1529**
**38025 Grenoble Cedex 1 (FR)**

(56) Documents cités:
**CN-A- 111 742 477     US-A1- 2008 084 195**
**US-A1- 2012 292 999     US-A1- 2018 284 826**

## Description

Domaine technique

La présente description concerne de façon générale les dispositifs électroniques, et plus particulièrement les dispositifs comprenant un régulateur linéaire de tension.

Technique antérieure

En électronique, un régulateur linéaire est un régulateur de tension reposant sur un composant actif travaillant dans sa zone linéaire ou sur un composant passif, comme une diode Zener, travaillant dans sa zone inverse.

Un régulateur de tension à chute faible (LDO - Low DropOut) est un type de régulateur linéaire de tension qui peut réguler la tension de sortie même lorsque la tension d'alimentation est très proche de la tension de sortie.

Le document US 2018/0284826 divulgue un circuit de régulation de tension, et les dispositif, appareil et procédé correspondants.

Le document CN 111742477 divulgue un régulateur de tension à plusieurs entrées.

Le document US 2008/0084195 divulgue un régulateur de combinaison analogique.

Le document US 2012/0292999 divulgue un module redondant avec des chemins de courant symétriques.

Résumé de l'invention

Un mode de réalisation pallie tout ou partie des inconvénients des dispositifs électroniques connus.

Un mode de réalisation prévoit un dispositif électronique comprenant :

une première entrée d'alimentation configurée pour recevoir une première tension d'alimentation ;
une première alimentation à découpage comprenant une première sortie, la première alimentation à découpage étant configurée pour générer une deuxième tension d'alimentation sur la première sortie ; et
un régulateur linéaire de tension configuré pour alimenter une charge comprise dans le dispositif, le régulateur étant configuré pour recevoir les première et deuxième tensions d'alimentation, le régulateur comprenant :

un premier transistor relié entre la première entrée d'alimentation et un noeud de sortie du régulateur ; et
un deuxième transistor relié entre la sortie de la première alimentation à découpage, et le noeud de sortie du régulateur,

le régulateur étant configuré pour que, lorsque le courant, tirée par la charge, est en dessous d'un seuil, un premier courant de sortie, fourni à la charge par le noeud de sortie du régulateur, est égal à un troisième courant traversant le deuxième transistor et que, lorsque ledit courant est au-dessus du seuil, le premier courant de sortie est égal à la somme d'un quatrième courant traversant le premier transistor et du troisième courant traversant le deuxième transistor, le quatrième courant étant non nul.

Un autre mode de réalisation prévoit un procédé de commande d'un dispositif électronique comprenant :

une première entrée d'alimentation recevant une première tension d'alimentation ;
une première alimentation à découpage comprenant une première sortie, la première alimentation à découpage générant une deuxième tension d'alimentation sur la première sortie ; et
un régulateur linéaire de tension alimentant une charge comprise dans le dispositif, le régulateur recevant les première et deuxième tensions d'alimentation, le régulateur comprenant :

un premier transistor relié entre la première entrée d'alimentation et un noeud de sortie du régulateur ; et
un deuxième transistor relié entre la sortie de la première alimentation à découpage, et le noeud de sortie du régulateur,
lorsque le courant, tirée par la charge, est en dessous d'un seuil, un premier courant de sortie, fournie à la charge par le noeud de sortie du régulateur, est égal à un troisième courant traversant le deuxième transistor et, lorsque ledit courant est au-dessus du seuil, le premier courant de sortie est égal à la somme d'un quatrième courant traversant le premier transistor et du troisième courant traversant le deuxième transistor, le quatrième courant étant non nul.

Selon un mode de réalisation, le régulateur est configuré pour que, lorsque le courant tirée par la charge est au-dessus du seuil, plus le courant tirée est important, plus le quatrième courant traversant le premier transistor est important.

Selon un mode de réalisation, le régulateur comprend :

un amplificateur d'erreur configuré pour recevoir en entrée une tension de consigne et une tension représentative de la tension de sortie du régulateur et configuré pour générer une tension d'erreur ;
un convertisseur tension vers courant, comprenant une entrée configuré pour recevoir la tension d'erreur et générant un cinquième courant sur une deuxième sortie du convertisseur et

un sixième courant sur une troisième sortie du convertisseur ; et

un premier circuit de commande de grille commandant le premier transistor et un deuxième circuit de commande de grille commandant le deuxième transistor, le convertisseur étant configuré pour fournir le cinquième courant au premier circuit de commande et le sixième courant au deuxième circuit de commande.

Selon un mode de réalisation, le régulateur comprend un pont diviseur de tension dont l'entrée est reliée au noeud de sortie du régulateur et dont la sortie est reliée à une entrée de l'amplificateur de manière à fournir la tension représentative de la tension de sortie.

Selon un mode de réalisation, le convertisseur comprend un troisième transistor relié entre un premier noeud et un noeud d'application d'une tension de référence, le troisième transistor étant configuré pour être commandé par la tension d'erreur, le convertisseur comprenant un quatrième transistor reliant le premier noeud à la deuxième sortie et au moins un cinquième transistor reliant le premier noeud à la troisième sortie.

Selon un mode de réalisation, le premier noeud et la troisième sortie sont reliés par un ensemble d'au moins deux cinquièmes transistors reliés en parallèle.

Selon un mode de réalisation, le deuxième circuit de commande de grille comprend un sixième transistor relié en diode entre la deuxième sortie du convertisseur et la sortie de la première alimentation à découpage, la borne de commande du sixième transistor étant reliée à une sortie du deuxième circuit de commande.

Selon un mode de réalisation, le deuxième circuit de commande comprend :

un septième transistor relié en diode entre une entrée configurée pour recevoir un courant de consigne et la sortie de la première alimentation à découpage, et

un huitième transistor relié entre la deuxième sortie du convertisseur et la sortie de la première alimentation à découpage, la borne de commande du huitième transistor étant reliée à la borne de commande du septième transistor.

Selon un mode de réalisation, le premier circuit de commande de grille comprend un neuvième transistor relié en diode, le neuvième transistor et une résistance étant reliés entre la première sortie du convertisseur et la première entrée du dispositif, la borne de commande du neuvième transistor étant reliée à une sortie du premier circuit de commande.

Selon un mode de réalisation, le premier circuit de commande comprend :

un dixième transistor relié en diode entre une entrée configurée pour recevoir un courant de consigne et la première entrée du dispositif, et

un onzième transistor relié entre la première sortie du convertisseur et la première entrée du dispositif, la borne de commande du dixième transistor étant reliée à la borne de commande du onzième transistor.

Selon un mode de réalisation, le premier circuit de commande comprend :

un douzième transistor relié entre la première sortie du convertisseur et la première entrée du dispositif ; un premier interrupteur relié entre la borne de commande du douzième transistor et l'entrée configurée pour recevoir le courant de consigne ; et un deuxième interrupteur relié entre la borne de commande du douzième transistor et la première entrée du dispositif.

Selon un mode de réalisation, le dispositif comprend au moins une deuxième alimentation à découpage, et comprend, pour chaque deuxième alimentation à découpage, un deuxième transistor, relié entre la sortie de la deuxième alimentation à découpage correspondante et le noeud de sortie, le régulateur étant configuré pour que seul un courant traversant un des deuxièmes transistors soit non nul en même temps.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un mode de réalisation d'un dispositif électronique comprenant un régulateur linéaire de tension ;

la figure 2 représente un mode de réalisation d'un régulateur linéaire de tension ;

la figure 3 représente plus en détail une partie du mode de réalisation de la figure 2 ;

la figure 4 représente plus en détail une autre partie du mode de réalisation de la figure 2 ; et

la figure 5 représente plus en détail une autre partie du mode de réalisation de la figure 2.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

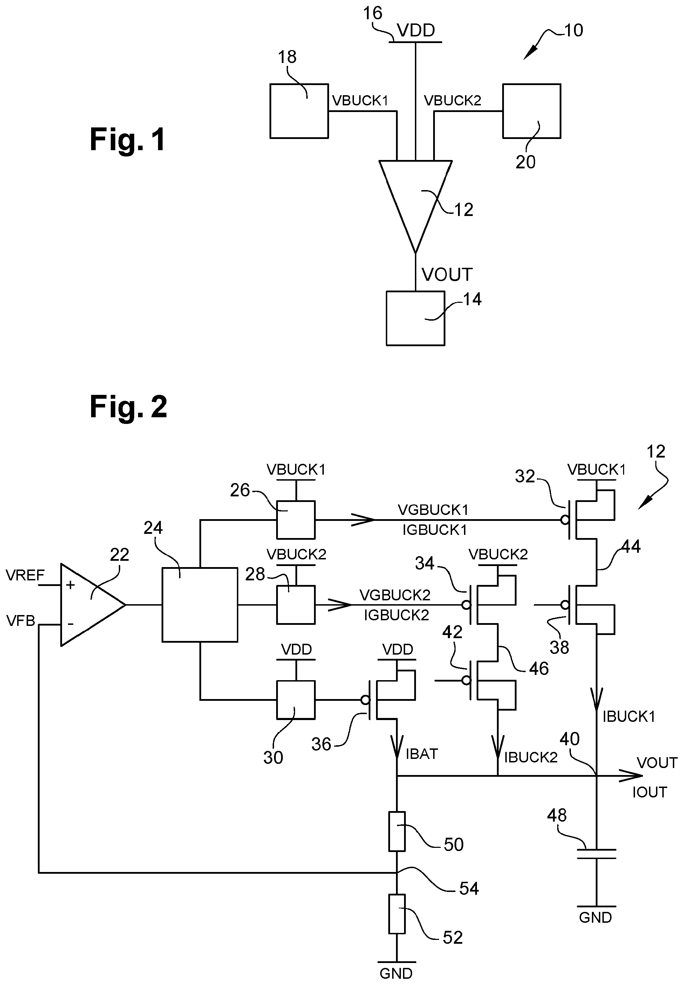

La figure 1 représente un mode de réalisation d'un dispositif électronique 10 comprenant un régulateur linéaire de tension 12. Le régulateur de tension 12 est un régulateur de tension à faible chute ou régulateur LDO (Low DropOut regulator).

Le régulateur 12 est configuré pour alimenter une charge 14. La charge 14 est par exemple un circuit analogique. La charge 14 est par exemple un circuit logique. La charge 14 est par exemple un circuit analogique de commande d'une alimentation à découpage (SMPS - Switched Mode Power Supply).

Le régulateur 12 comprend une sortie sur laquelle est générée une tension de sortie VOUT. La tension VOUT est la tension d'alimentation du circuit 14. Ladite sortie est reliée, de préférence connectée, à une entrée d'alimentation du circuit 14.

Le dispositif 10 peut par exemple fonctionner dans un mode basse consommation. De manière à assurer une consommation basse, le régulateur 12 peut être alimenté par au moins deux sources de tension, au moins une ayant une valeur inférieure à la tension d'alimentation du dispositif 10. Lesdites sources de tension fournissent des tensions d'alimentation différentes. Le régulateur 12 génère la tension de sortie VOUT à partir de l'une des tensions d'alimentation. Le régulateur génère un courant IOUT sur ladite sortie.

Dans l'exemple de la figure 1, le régulateur 12 est relié à trois sources d'alimentation. Le régulateur 12 peut donc être alimenté par une ou plusieurs de ces sources de tension. Selon la charge 14 et selon la puissance utilisée par la charge 14, la tension d'alimentation du régulateur peut provenir d'une de ces sources, ou de plusieurs.

Le régulateur 12 est par exemple alimenté par une tension d'alimentation VDD du dispositif 10. La tension VDD est par exemple supérieure à 3 V, par exemple égale à 5 V. Autrement dit, le régulateur 12 comprend une entrée d'alimentation reliée, de préférence connectée, à un noeud 16 d'application de la tension VDD. Le régulateur reçoit donc sur ladite entrée un courant IBAT.

Le régulateur 12 est par exemple alimenté par au moins une tension générée par une alimentation à découpage. Dans l'exemple de la figure 1, le dispositif comprend deux alimentations à découpage 18 et 20. Chacune des alimentations 18 et 20 comprend donc une sortie reliée, de préférence connectée, à une entrée d'alimentation du régulateur 12. Par exemple, les alimentations 18 et 20 sont des alimentations abaisseuses (buck).

L'alimentation 18 génère une tension d'alimentation VBUCK1 sur la sortie reliée, de préférence connectée, au régulateur 12. Le régulateur 12 reçoit donc la tension VBUCK1 sur une entrée d'alimentation. De même, l'alimentation 18 génère un courant IBUCK1 sur ladite sortie. Le régulateur 12 reçoit donc le courant IBUCK1 sur une entrée d'alimentation. Similairement, l'alimentation 20 génère une tension d'alimentation VBUCK2 sur la sortie reliée, de préférence connectée, au régulateur 12. Le régulateur 12 reçoit donc la tension VBUCK2 sur une entrée d'alimentation. De même, l'alimentation 20 génère un courant IBUCK2 sur ladite sortie. Le régulateur 12 reçoit donc le courant IBUCK2 sur une entrée d'alimentation. Les tensions VBUCK1 et VBUCK2 sont par exemple inférieures à la tension d'alimentation VDD, par exemple inférieures à 3,3 V.

Les alimentations 18 et 20 sont de préférence différentes. Les alimentations 18 et 20 sont par exemple configurées pour fournir des gammes de tensions ou de courants différentes.

Le dispositif 10 est de préférence configuré pour qu'une seule des alimentations 18 et 20 ne puisse être active à un instant. Autrement dit, si le régulateur 12 est alimenté par l'alimentation 18, le régulateur n'est pas alimenté par l'alimentation 20. De même, si le régulateur 12 est alimenté par l'alimentation 20, le régulateur n'est pas alimenté par l'alimentation 18. Le dispositif 10 est ainsi configuré de telle manière que le régulateur 12 ne reçoive pas des courants IBUCK1 et IBUCK2 non nuls à un même instant.

Le dispositif 10 est configuré de telle manière que le courant IOUT soit égal à la somme du courant IBAT et du courant IBUCK, le courant IBUCK correspondant au courant IBUCK1 ou au courant IBUCK2, selon l'alimentation 18 ou 20 alimentant le régulateur.

Le courant IBAT est configuré pour être déterminé par l'équation suivante : IBAT = $\beta$ * IBUCK - IOS, IOS étant une valeur constante, et $\beta$ étant par exemple une variable, dépendant par exemple du courant utilisé par la charge. De préférence, plus le courant demandé par la charge est important, plus la valeur β est élevée.

Durant le fonctionnement du régulateur, par exemple en mode basse consommation, lorsque la valeur β est telle que la valeur du terme β * IBUCK est inférieure à la valeur de la constante IOS, la valeur du courant IBAT est nulle, la valeur du courant IBAT ne pouvant pas être négative. Le courant IOUT est donc égal au courant IBUCK.

Durant le fonctionnement du régulateur, par exemple en mode de fonctionnement basse consommation, lorsque la valeur β est telle que la valeur du terme β * IBUCK est supérieure à la valeur de la constante IOS, la valeur du courant IBAT n'est pas nulle. Ainsi, le courant IOUT est dépendant de la valeur du courant IBAT et du courant IBUCK. La valeur VOUT est dépendante de la valeur de la tension VDD et de la tension VBUCK. Le régulateur est donc alimenté par la tension d'alimentation VDD et par l'alimentation 18 ou 20 fournissant la tension VBUCK.

Ainsi, lorsque le courant utilisé par la charge est inférieur à un seuil, le régulateur est alimenté par une alimentation à découpage, et lorsque le courant utilisé par la charge est supérieur au seuil, le régulateur est alimenté par l'alimentation à découpage et la source de la tension d'alimentation VDD. De préférence, plus le courant utilisé par la charge est important, plus la proportion du courant IOUT formée par le courant IBAT est importante.

La figure 2 représente un mode de réalisation du régulateur linéaire de tension 12.

Le régulateur 12 comprend un amplificateur d'erreur 22. L'amplificateur 22 est par exemple un amplificateur opérationnel. L'amplificateur 22 comprend une première entrée, par exemple une entrée positive (+), sur laquelle sont fournis une tension de consigne VREF et un courant IREF. La première entrée est ainsi reliée, de préférence connectée, à un noeud d'application de la tension VREF. L'amplificateur 22 comprend une deuxième entrée, par exemple une entrée négative (-), sur laquelle est appliquée une tension de boucle VFB. La tension de boucle est dépendante de la tension de sortie VOUT, par exemple est proportionnelle à la tension de sortie VOUT.

Le régulateur 12 comprend un convertisseur tension vers courant (V to I converter) 24. Le convertisseur 24 comprend une entrée reliée, de préférence connectée, à une sortie de l'amplificateur 22. Le convertisseur 24 comprend au moins deux sorties, chaque sortie fournissant un courant représentatif de la tension reçue en entrée par le convertisseur 24.

Le régulateur 12 comprend des circuits de commande de grille 26, 28, 30. Le régulateur 12 comprend autant de circuits de commande de grille qu'il y a de possible source d'alimentation pour le régulateur 12. Autrement dit, dans l'exemple de la figure 1, le régulateur 12 comprend le circuit de commande de grille 30 associé à la source de la tension VDD et les circuits de commande de grille 26 et 28 respectivement associés aux alimentations 18 et 20.

Les circuits de commande 26, 28 et 30 sont configurés pour recevoir chacun un courant généré par le convertisseur 24. Ainsi, chaque circuit 26, 28, 30 comprend une entrée reliée, de préférence connectée, à une sortie du convertisseur 24.

De préférence, le convertisseur 24 est configuré pour que le courant fourni aux circuits de commande de grille 26 et 28, c'est-à-dire les circuits de commande de grille associés aux alimentations à découpage 18 et 20, soit n fois supérieur au courant fourni au circuit de commande grille 30, c'est-à-dire le circuit de commande associé à la source de tension d'alimentation VDD. La valeur n est de préférence une valeur entière, par exemple positive, par exemple supérieure à deux.

Chaque circuit de commande de grille est configuré pour recevoir la tension d'alimentation auquel il est associé. Ainsi, les circuits 26 et 28 reçoivent respectivement la tension VBUCK1 et VBUCK2 et le circuit 30 reçoit la tension VDD. Autrement dit, le circuit 26 comprend une entrée d'alimentation reliée, de préférence connectée, à un noeud d'application de la tension VBUCK1, par exemple la sortie de l'alimentation 18. Le circuit 28 comprend une entrée d'alimentation reliée, de préférence connectée, à un noeud d'application de la tension VBUCK2, par exemple la sortie de l'alimentation 20. Le circuit 30 comprend une entrée d'alimentation reliée, de préférence connectée, à un noeud d'application de la tension VDD.

Chaque circuit de commande de grille 26, 28, 30 génère une tension de commande de grille d'un transistor. Le circuit 26 génère la tension de commande de grille VGBUCK1 d'un transistor 32. Le circuit 28 génère la tension de commande de grille VGBUCK2 d'un transistor 34. Le circuit 30 génère la tension de commande de grille VGBAT d'un transistor 36.

Le transistor 32 est relié en série avec un transistor 38 entre un noeud d'application de la tension VBUCK1 et un noeud de sortie 40, sur lequel est généré la tension VOUT de sortie du régulateur 12. Le transistor 34 est relié en série avec un transistor 42 entre un noeud d'application de la tension VBUCK2 et le noeud de sortie 40. Le transistor 36 est relié entre un noeud d'application de la tension VDD et le noeud 40.

Les transistors 32, 34, 36, 38, 42 sont par exemple des transistors à effet de champ à grille isolée (MOSFET). Par exemple les transistors 32, 34, 36, 38, 42 sont des transistors à canal P.

Une borne de conduction, par exemple la source, du transistor 32 est reliée, de préférence connectée, au noeud d'application de la tension VBUCK1 et une autre borne de conduction, par exemple le drain, du transistor 32 est reliée, de préférence connectée, à un noeud 44. Une borne de conduction, par exemple la source, du transistor 38 est reliée, de préférence connectée, au noeud 40 et une autre borne de conduction, par exemple le drain, du transistor 38 est reliée, de préférence connectée, au noeud 44. Le corps du transistor 32 est par exemple relié, de préférence connecté, au noeud d'application de la tension VBUCK1. Le corps du transistor 38 est par exemple relié, de préférence connecté, au noeud 40.

Une borne de conduction, par exemple la source, du transistor 34 est reliée, de préférence connectée, au noeud d'application de la tension VBUCK2 et une autre borne de conduction, par exemple le drain, du transistor 34 est reliée, de préférence connectée, à un noeud 46. Une borne de conduction, par exemple la source, du transistor 42 est reliée, de préférence connectée, au noeud 40 et une autre borne de conduction, par exemple le drain, du transistor 42 est reliée, de préférence connectée, au noeud 44. Le corps du transistor 34 est par exemple relié, de préférence connecté, au noeud d'application de la tension VBUCK2. Le corps du transistor 42 est par exemple relié, de préférence connecté, au noeud 40.

Une borne de conduction, par exemple la source, du transistor 36 est reliée, de préférence connectée, au noeud d'application de la tension VDD et une autre borne de conduction, par exemple le drain, du transistor 36 est reliée, de préférence connectée, au noeud 40.

Le courant traversant le transistor 36, c'est-à-dire le courant arrivant au noeud 40 depuis le noeud d'application de la tension VDD, est le courant IBAT. Le courant traversant le transistor 34 et le transistor 42, c'est-à-dire le courant arrivant au noeud 40 depuis le noeud d'application de la tension VBUCK2, est le courant IBUCK2. Le courant traversant le transistor 32 et le transistor 44, c'est-à-dire le courant arrivant au noeud 40 depuis le noeud d'application de la tension VBUCK1, est le courant IBUCK1.

Le courant de sortie IOUT, c'est-à-dire le courant fourni en sortie du régulateur 12, correspond à la somme des courants IBAT, IBUCK1 et IBUCK2, les courants IBUCK1 et IBUCK2 ne pouvant être non nul en même temps.

Le régulateur 12 comprend un circuit de commande non représenté. Ledit circuit de commande est configuré pour générer les tensions de commande des transistors 38 et 42.

Le régulateur 12 comprend par exemple un condensateur 48 relié entre le noeud 40 et un noeud d'application d'une tension de référence GND, par exemple la masse. Autrement dit, une borne du condensateur 48 est reliée, de préférence connectée, au noeud 40 et une autre borne du condensateur 48 est reliée, de préférence connectée, au noeud d'application de la tension GND.

Le régulateur comprend deux résistances 50 et 52. Les résistances 50 et 52 forment un pont diviseur de tension générant la tension VFB. Les résistances 50 et 52 sont reliées en série entre le noeud 40 et le noeud d'application de la tension GND. Une borne de la résistance 50 est reliée, de préférence connectée, au noeud 40 et une autre borne de la résistance 50 est reliée, de préférence connectée, à un noeud 54 sur lequel est générée la tension VFB. Une borne de la résistance 52 est reliée, de préférence connectée, au noeud 54 et une autre borne de la résistance 52 est reliée, de préférence connectée, au noeud d'application de la tension GND. Le noeud 54 est relié, de préférence connecté, à la deuxième entrée de l'amplificateur 22. Le noeud 40 correspond donc au noeud d'entrée du pont diviseur de tension et le noeud 54 correspond au noeud de sortie du pont diviseur de tension.

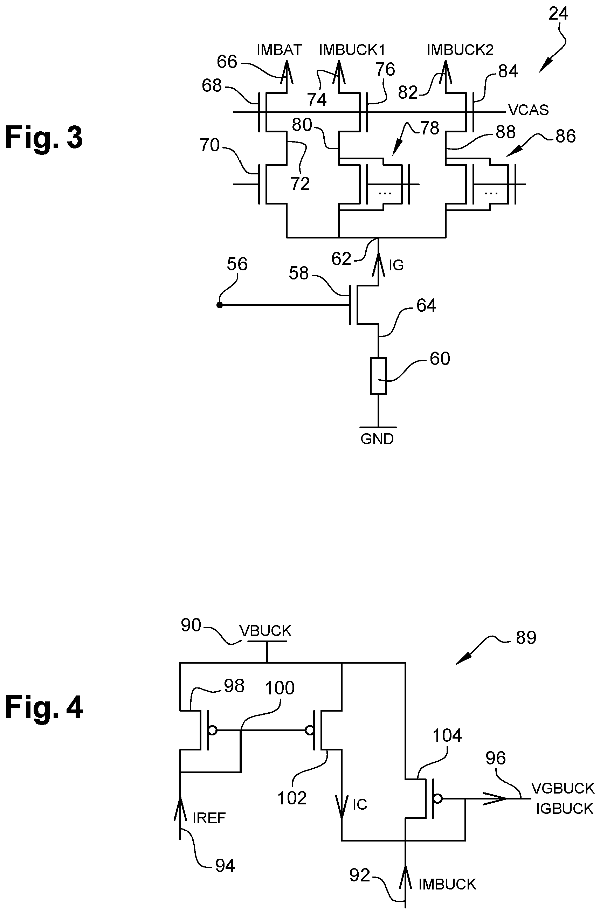

La figure 3 représente plus en détail une partie du mode de réalisation de la figure 2. Plus précisément, la figure 3 représente un mode de réalisation du convertisseur tension vers courant 24 de la figure 2.

Le convertisseur 24 comprend une entrée 56, reliée, de préférence connectée, à la sortie de l'amplificateur 22.

Le convertisseur comprend un transistor 58. Le transistor 58 est par exemple un transistor MOSFET, par exemple un transistor à canal N. Le transistor 58 est commandé par la tension d'entrée, c'est-à-dire la tension fournie sur le noeud 56 par l'amplificateur 22. La borne de commande du transistor 58 est reliée, de préférence connectée, au noeud 56.

Le convertisseur comprend une résistance 60. La résistance 60 est reliée en série avec le transistor 58 entre un noeud 62 et un noeud d'application de la tension de référence GND. Autrement dit, une borne de conduction du transistor 58, par exemple le drain, est reliée, de préférence connectée, au noeud 62 et une autre borne de conduction du transistor 58, par exemple la source, est reliée, de préférence connectée, à un noeud 64. Le transistor 58 et la résistance 60 sont traversé par un courant IG.

Le noeud 62 est relié à un noeud 66 de sortie du convertisseur 24. Le convertisseur 24 fournit, par la sortie 66, un courant IMBAT. Le courant IMBAT est le courant fourni au circuit de commande 30 de la figure 2.

Le convertisseur 24 comprend un transistor 68 et un transistor 70. Les transistors 68 et 70 sont de préférence des transistors MOSFET, par exemple des transistors à canal N. Les transistors 68 et 70 sont reliés en série entre le noeud 62 et la sortie 66. Autrement dit, une borne de conduction, par exemple le drain, du transistor 68 est reliée, de préférence connectée, à la sortie 66 et une autre borne de conduction, par exemple la source, du transistor 68 est reliée, de préférence connectée, à un noeud 72. Une borne de conduction, par exemple le drain, du transistor 70 est reliée, de préférence connectée, au noeud 72 et une autre borne de conduction, par exemple la source, du transistor 70 est reliée, de préférence connectée, au noeud 62.

Le noeud 62 est relié à un noeud 74 de sortie du convertisseur 24. Le convertisseur 24 fournit, par la sortie 74, un courant IMBUCK1. Le courant IMBUCK1 est le courant fourni au circuit de commande 26 de la figure 2.

Le convertisseur 24 comprend un transistor 76 et un ensemble de transistors 78. Le transistor 76 et les transistors de l'ensemble 78 sont par exemple des transistors MOSFET, par exemple des transistors à canal N. L'ensemble de transistors 78 comprend n transistors, reliés en parallèle. Autrement dit, les drains des transistors de l'ensemble 78 sont reliés, de préférence connectés, les uns aux autres et les sources des transistors de l'ensemble 78 sont reliées, de préférence connectées, les unes aux autres. De plus, les bornes de commande des transistors de l'ensemble 78 sont reliées, de préférence connectées, les unes aux autres.

Le transistor 76 et l'ensemble 78 sont reliés en série entre le noeud 62 et la sortie 74. Autrement dit, une borne de conduction, par exemple le drain, du transistor 76 est reliée, de préférence connectée, à la sortie 74 et une autre borne de conduction, par exemple la source, du transistor 76 est reliée, de préférence connectée, à un noeud 80. Une borne de conduction, par exemple le drain, de l'ensemble 78, c'est-à-dire les drains des transistors de l'ensemble 78, est reliée, de préférence connectée, au noeud 80 et une autre borne de conduction, par exemple la source, de l'ensemble 78 est reliée, de préférence connectée, au noeud 62.

Le noeud 62 est relié à un noeud 82 de sortie du convertisseur 24. Le convertisseur 24 fournit, par la sortie 82, un courant IMBUCK2. Le courant IMBUCK2 est le courant fourni au circuit de commande 28 de la figure 2.

Le convertisseur 24 comprend un transistor 84 et un ensemble de transistors 86. Le transistor 84 et les transistors de l'ensemble 86 sont par exemple des transistors MOSFET, par exemple des transistors à canal N. L'ensemble de transistors 86 comprend plusieurs transistors, de préférence autant de transistors que l'ensemble 78, de préférence n transistors, reliés en parallèle. Autrement dit, les drains des transistors de l'ensemble 86 sont reliés, de préférence connectés, les uns aux autres et les sources des transistors de l'ensemble 86 sont reliées, de préférence connectées, les unes aux autres. De plus, les bornes de commande des transistors de l'ensemble 86 sont reliées, de préférence connectées, les unes aux autres.

Le transistor 84 et l'ensemble 86 sont reliés en série entre le noeud 62 et la sortie 82. Autrement dit, une borne de conduction, par exemple la source, du transistor 84 est reliée, de préférence connectée, à la sortie 82 et une autre borne de conduction, par exemple le drain, du transistor 84 est reliée, de préférence connectée, à un noeud 88. Une borne de conduction, par exemple la source, de l'ensemble 86, c'est-à-dire les sources des transistors de l'ensemble 86, est reliée, de préférence connectée, au noeud 88 et une autre borne de conduction, par exemple le drain, de l'ensemble 86, c'est-à-dire les drains des transistors de l'ensemble 86, est reliée, de préférence connectée, au noeud 62.

Les bornes de commande des transistors 68, 76 et 84 sont reliées, de préférence connectées, les unes aux autres. Les transistors 68, 76 et 84 sont commandés par une tension VCAS. La tension VCAS est une tension de cascode, configurée de telle manière que les tensions de source des transistors 68, 76 et 84 soient identiques.

Le transistor 70 et les ensembles 78 et 86 sont commandés par des tensions générées par le circuit de commande non représenté du régulateur 12. Durant le fonctionnement du convertisseur 24, la tension de commande du transistor 70 est telle que le transistor 70 est passant, par exemple est égale à la tension VDD. Durant le fonctionnement du convertisseur 24, la tension de commande de l'ensemble 78 ou 86 correspondant à l'alimentation à découpage alimentant le régulateur 12 est telle que ledit ensemble est passant, par exemple est égale à la tension VDD. La tension de commande de l'autre ensemble est telle que ledit ensemble est bloqué, par exemple sensiblement égal à 0 V.

De préférence, les transistors de l'ensemble 78 sont identiques les uns aux autres. De préférence, les transistors de l'ensemble 86 sont identiques les uns aux autres. De préférence, les transistors de l'ensemble 78 sont identiques aux transistors de l'ensemble 86. De préférence, le transistor 70 est identique aux transistors des ensembles 78 et 86.

Les courants IMBUCK1 et IMBUCK2 sont ainsi n fois supérieurs au courant IBAT. Les tensions de commande des ensembles 78 et 86 sont telles que les courants IMBUCK1 et IMBUCK2 ne puissent pas être non nuls durant les mêmes périodes de fonctionnement.

Le courant IG est égal, durant le fonctionnement du dispositif 10, à la somme du courant IMBAT et des courants IMBUCK1 et IMBUCK2, un des courants IMBUCK1 et IMBUCK2 étant nul. Ainsi, le courant non nul parmi les courants IMBUCK1 et IMBUCK2 est égal à $\frac{n}{n+1}IG$ et le courant IMBAT est égal à $\frac{1}{n+1}IG$.

La figure 4 représente plus en détail une autre partie du mode de réalisation de la figure 2. Plus précisément, la figure 4 illustre un mode de réalisation d'un circuit 89. Le circuit 89 correspond aux circuits 26 et 28, c'est-à-dire les circuits de commande de grille des transistors 32 et 34, autrement dit le circuit de commande de grille associé aux tensions d'alimentation VBUCK1 et VBUCK2. Le régulateur 12 comprend ainsi deux circuits 89. De manière plus générale, le régulateur 12 comprend par exemple autant de circuits 89 que de potentielles tensions d'alimentation provenant d'une alimentation à découpage.

Le circuit 89 comprend une entrée 90 sur laquelle est appliquée la tension d'alimentation VBUCK, correspondant à la tension VBUCK1 ou VBUCK2 selon si le circuit 89 correspond au circuit 26 ou 28. Le circuit 89 comprend une entrée 92 sur laquelle est fourni le courant IMBUCK, correspondant au courant IMBUCK1 ou au courant IMBUCK2. Autrement dit, l'entrée 92 est reliée, de préférence connectée, à la sortie du circuit 24 associée à la tension d'alimentation VBUCK. Le circuit 89 comprend une entrée 94 sur laquelle est fourni le courant de consigne IREF. Le courant IREF est par exemple généré par le circuit de commande non représenté décrit en relation avec la figure 2. Le courant IREF est par exemple sensiblement constant lors du fonctionnement du circuit 89. Le circuit 89 comprend une sortie 96 sur laquelle est générée une tension VGBUCK, correspondant à la tension VGBUCK1 ou la tension VGBUCK2.

Le circuit 89 comprend un transistor 98. Le transistor 98 est par exemple un transistor MOSFET, par exemple un transistor à canal P. Le transistor 98 est relié entre l'entrée 90 et l'entrée 94. Autrement dit, une borne de conduction du transistor 98, par exemple le drain, est reliée, de préférence connectée, à l'entrée 94 et une autre borne de conduction du transistor 98, par exemple la source, est reliée, de préférence connectée, à l'entrée 90. La borne de commande du transistor 98 est reliée, de préférence connectée, à un noeud 100. Le transistor 98 est par exemple relié en diode. Le noeud 100 est par exemple relié, de préférence connecté, à l'entrée 94.

Le circuit 89 comprend un transistor 102. Le transistor 102 est par exemple un transistor MOSFET, par exemple un transistor à canal P. Le transistor 102 est relié entre l'entrée 90 et l'entrée 92. Autrement dit, une borne de conduction du transistor 102, par exemple le drain, est reliée, de préférence connectée, à l'entrée 92 et une autre borne de conduction du transistor 102, par exemple la source, est reliée, de préférence connectée, à l'entrée 90. La borne de commande du transistor 102 est reliée, de préférence connectée, au noeud 100.

Le circuit 89 comprend un transistor 104. Le transistor 104 est par exemple un transistor MOSFET, par exemple un transistor à canal P. Le transistor 104 est relié entre l'entrée 90 et l'entrée 92. Le transistor 104 est relié en parallèle du transistor 102. Autrement dit, une borne de conduction du transistor 104, par exemple le drain, est reliée, de préférence connectée, à l'entrée 92 et une autre borne de conduction du transistor 104, par exemple la source, est reliée, de préférence connectée, à l'entrée 90. La borne de commande du transistor 104 est reliée, de préférence connectée, à la sortie 96.

De préférence, la surface du transistor 32 ou 34 auquel correspond le circuit 89 est égale à m fois la surface du transistor 104, m étant une valeur constante, de préférence une valeur positive entière.

Le courant IBUCK est égal à $\alpha$ fois un courant IC traversant le transistor 104. La valeur $\alpha$ est égale à m lorsque le transistor 32 ou 34 est en saturation.

De préférence, les transistors 98 et 102 sont identiques. Le courant IMBUCK est donc égal à la somme du courant IC et du courant IREF.

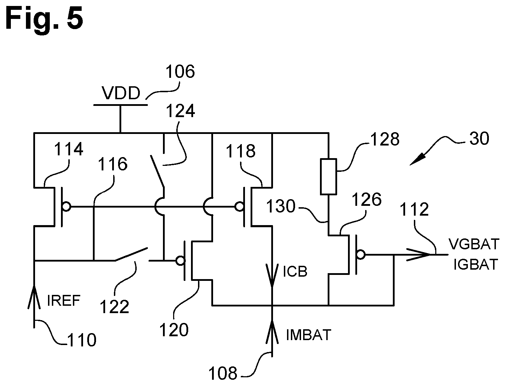

La figure 5 représente plus en détail une autre partie du mode de réalisation de la figure 2. Plus précisément, la figure 5 illustre un mode de réalisation d'un circuit 30, c'est-à-dire le circuit de commande de grille du transistor 36, autrement dit le circuit de commande de grille associé à la tension d'alimentation VDD.

Le circuit 30 comprend une entrée 106 sur laquelle est appliquée la tension d'alimentation VDD. Le circuit 30 comprend une entrée 108 sur laquelle est fourni le courant IMBAT. Autrement dit, l'entrée 108 est reliée, de préférence connectée, à la sortie du circuit 24 associée à la tension d'alimentation VDD. Le circuit 30 comprend une entrée 110 sur laquelle est fourni le courant de consigne IREF. Le courant IREF est par exemple généré par le circuit de commande non représenté décrit en relation avec la figure 2. Le courant IREF est par exemple sensiblement constant lors du fonctionnement du circuit 30. Le circuit 30 comprend une sortie 112 sur laquelle est générée la tension VGBAT.

Le circuit 30 comprend un transistor 114. Le transistor 114 est par exemple un transistor MOSFET, par exemple un transistor à canal P. Le transistor 114 est relié entre l'entrée 106 et l'entrée 110. Autrement dit, une borne de conduction du transistor 114, par exemple le drain, est reliée, de préférence connectée, à l'entrée 110 et une autre borne de conduction du transistor 114, par exemple la source, est reliée, de préférence connectée, à l'entrée 106. La borne de commande du transistor 114 est reliée, de préférence connectée, à un noeud 116. Le transistor 114 est par exemple relié en diode. Le noeud 116 est par exemple relié, de préférence connecté, à l'entrée 110.

Le circuit 30 comprend un transistor 118. Le transistor 118 est par exemple un transistor MOSFET, par exemple un transistor à canal P. Le transistor 118 est relié entre l'entrée 106 et l'entrée 108. Autrement dit, une borne de conduction du transistor 118, par exemple le drain, est reliée, de préférence connectée, à l'entrée 108 et une autre borne de conduction du transistor 118, par exemple la source, est reliée, de préférence connectée, à l'entrée 106. La borne de commande du transistor 118 est reliée, de préférence connectée, au noeud 116.

Le circuit 30 comprend un transistor 120. Le transistor 120 est par exemple un transistor MOSFET, par exemple un transistor à canal P. Le transistor 120 est relié entre l'entrée 106 et l'entrée 108. Le transistor 120 est relié en parallèle du transistor 118. Autrement dit, une borne de conduction du transistor 120, par exemple le drain, est reliée, de préférence connectée, à l'entrée 108 et une autre borne de conduction du transistor 120, par exemple la source, est reliée, de préférence connectée, à l'entrée 106. La borne de commande du transistor 120 est reliée à l'entrée 110 par un interrupteur 122. En outre, la borne de commande du transistor 120 est reliée à l'entrée 106 par un interrupteur 124. Autrement dit, une borne de l'interrupteur 122 est reliée, de préférence connectée, à la borne de commande du transistor 120 et l'autre borne de l'interrupteur 122 est reliée, de préférence connectée, au noeud 116. Similairement, une borne de l'interrupteur 124 est reliée, de préférence connectée, à la borne de commande du transistor 120 et l'autre borne de l'interrupteur 124 est reliée, de préférence connectée, à l'entrée 106. Les interrupteurs 122 et 124 sont par exemple commandés par le circuit de commande non représenté décrit en relation avec la figure 2.

Le circuit 30 comprend par exemple un transistor 126 et une résistance 128 reliés en série entre l'entrée 106 et l'entrée 108. Le transistor 126 est par exemple un transistor MOSFET, par exemple un transistor à canal P. Une borne de la résistance 128 est par exemple reliée, de préférence connectée, à l'entrée 106 et l'autre borne de la résistance 128 est reliée, de préférence connectée, à un noeud 130. Une borne de conduction du transistor 126, par exemple la source, est reliée, de préférence connectée, au noeud 130 et une autre borne de conduction du transistor 126, par exemple le drain, est reliée, de préférence connectée, à l'entrée 108. La borne de commande du transistor 126 est reliée, de préférence connectée, à la sortie 112 sur laquelle est appliquée la tension VGBAT. La sortie 112 est en outre reliée, de préférence connectée, à l'entrée 108, de manière à relier le transistor 126 en diode.

De préférence, la surface du transistor 36 est égale à m fois la surface du transistor 126. Le transistor 36 est toujours en saturation. Le courant IBAT est ainsi égal à m fois la valeur du courant ICB, le courant ICB étant le courant traversant le transistor 126. De plus, le courant IMBAT est égal à la somme de p fois le courant IREF et le courant ICB, p étant une valeur constante définie par le circuit 24.

Ainsi, le courant IBAT est configuré pour être déterminé par l'équation suivante : IBAT = β * IBUCK - IOS, β étant égal à $\dfrac{m}{\propto * n}$ et IOS étant égal à

$$m * \left( p - \frac{1}{n} \right) * IREF \ .$$

Quand le courant utilisé par la charge est faible, le courant IOUT est égal au courant IBUCK, la partie IBAT du courant IOUT étant nulle.

Quand la chute de tension est forte, c'est-à-dire lorsque la différence de tension entre VBUCK et la tension régulée est importante, la valeur α devient égale à la valeur m, et le courant IOUT est égal à la somme du courant IBAT et du courant IBUCK, le courant IBAT étant non nul et le courant IBUCK étant égal à n fois le courant IBAT. Le courant IOUT est donc en majeure partie fourni par l'alimentation à découpage générant IBUCK.

Quand la chute de tension diminue, le transistor 32 ou 34, correspondant à l'alimentation à découpage générant un courant non nul, entre en région triode. La valeur α devient alors inférieure à la valeur m. Le courant IBUCK devient alors inférieur à n fois le courant IBAT.

Plus la chute de tension diminue, plus le transistor entre dans la région triode, et la valeur α devient de plus en plus inférieure à la valeur m. Ainsi, le quotient de la valeur du courant IBUCK sur la valeur du courant IBAT diminue jusqu'à devenir inférieur à 1. Le courant IBUCK devient inférieur au courant IBAT. La plus grande partie du courant IOUT est donc fournie par le courant IBAT.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que les modes de réalisation décrits comprennent deux alimentations à découpage, il est bien entendu que le dispositif peut comprendre une unique alimentation é découpage, ou un nombre plus important d'alimentations à découpage.

De plus, bien que les modes de réalisation décrits comprennent un transistor 70 et des ensembles 78 et 86, le transistor 70 peut être remplacé par un ensemble de transistors, de préférence identiques, reliés en parallèle tels que les ensembles 78 et 86. Les ensembles 78 et 86 comprennent alors n fois plus de transistors que l'ensemble 70.

Enfin, la mise en oeuvre pratique des modes de réalisation et variantes décrits est à la portée de la personne du métier à partir des indications fonctionnelles données ci-dessus.

## Revendications

1.  Dispositif électronique (10) comprenant :

    - une première entrée (16) d'alimentation configurée pour recevoir une première tension d'alimentation (VDD) ;
    - une première alimentation à découpage (18, 20) comprenant une première sortie, la première alimentation à découpage (18, 20) étant configurée pour générer une deuxième tension d'alimentation (VBUCK, VBUCK1, VBUCK2) sur la première sortie ; et
    - un régulateur linéaire de tension (12) configuré pour alimenter une charge (14) comprise dans le dispositif, le régulateur (12) étant configuré pour recevoir les première (VDD) et deuxième (VBUCK, VBUCK1, VBUCK2) tensions d'alimentation, le régulateur (12) comprenant :

        ○ un premier transistor (36) relié entre la première entrée d'alimentation (16) et un noeud de sortie du régulateur (40) ;
        ○ un deuxième transistor (32, 34) relié entre la sortie de la première alimentation à découpage (18, 20), et le noeud de sortie du régulateur (40) ;
        ○ un amplificateur d'erreur (22) configuré pour recevoir en entrée une tension de consigne (VREF) et une tension (VFB) représentative de la tension de sortie (VOUT) du régulateur et configuré pour générer une tension d'erreur ;
        ○ un convertisseur tension vers courant (24), comprenant une entrée configurée pour recevoir la tension d'erreur et générant un cinquième courant (IMBUCK, IMBUCK1, IMBUCK2) sur une deuxième sortie (66) du convertisseur (24) et un sixième courant (IMBAT) sur une troisième sortie (74, 82) du convertisseur (24) ; et

◦ un premier circuit de commande de grille (30) commandant le premier transistor (36) et un deuxième circuit de commande de grille (26, 28) commandant le deuxième transistor (32, 34), le convertisseur étant configuré pour fournir le cinquième courant (IMBUCK, IMBUCK1, IMBUCK2) au premier circuit de commande (30) et le sixième courant (IMBAT) au deuxième circuit de commande (26, 28),

le régulateur (12) étant configuré pour que, lorsque le courant, tiré par la charge, est en dessous d'un seuil, un premier courant de sortie (IOUT), fourni à la charge (14) par le noeud de sortie du régulateur (12), est égal à un troisième courant (IBUCK, IBUCK1, IBUCK2) traversant le deuxième transistor (32, 34) et que, lorsque ledit courant est au-dessus du seuil, le premier courant de sortie (IOUT) est égal à la somme d'un quatrième courant (IBAT) traversant le premier transistor (36) et du troisième courant (IBUCK, IBUCK1, IBUCK2) traversant le deuxième transistor (32, 34), le quatrième courant (IBAT) étant non nul, le deuxième circuit (26, 28, 89) de commande de grille comprenant un sixième transistor (104) relié en diode entre la deuxième sortie du convertisseur (92) et la sortie de la première alimentation à découpage (90), la borne de commande du sixième transistor (104) étant reliée à une sortie (96) du deuxième circuit de commande (26, 28, 89).

2. Procédé de commande d'un dispositif électronique (10) comprenant :

- une première entrée (16) d'alimentation recevant une première tension d'alimentation (VDD) ;
- une première alimentation à découpage (18, 20) comprenant une première sortie, la première alimentation à découpage (18, 20) générant une deuxième tension d'alimentation (VBUCK, VBUCK1, VBUCK2) sur la première sortie ; et
- un régulateur linéaire de tension (12) alimentant une charge (14) comprise dans le dispositif, le régulateur (12) recevant les première (VDD) et deuxième (VBUCK, VBUCK1, VBUCK2) tensions d'alimentation, le régulateur (12) comprenant :

◦ un premier transistor (36) relié entre la première entrée d'alimentation (16) et un noeud de sortie du régulateur (40) ;
◦ un deuxième transistor (32, 34) relié entre la sortie de la première alimentation à découpage (18, 20), et le noeud de sortie du régulateur (40) ;

◦ un amplificateur d'erreur (22) configuré pour recevoir en entrée une tension de consigne (VREF) et une tension (VFB) représentative de la tension de sortie (VOUT) du régulateur et configuré pour générer une tension d'erreur ;

◦ un convertisseur tension vers courant (24), comprenant une entrée configurée pour recevoir la tension d'erreur et générant un cinquième courant (IMBUCK, IMBUCK1, IMBUCK2) sur une deuxième sortie (66) du convertisseur (24) et un sixième courant (IMBAT) sur une troisième sortie (74, 82) du convertisseur (24) ; et

◦ un premier circuit de commande de grille (30) commandant le premier transistor (36) et un deuxième circuit de commande de grille (26, 28) commandant le deuxième transistor (32, 34), le convertisseur étant configuré pour fournir le cinquième courant (IMBUCK, IMBUCK1, IMBUCK2) au premier circuit de commande (30) et le sixième courant (IMBAT) au deuxième circuit de commande (26, 28),

lorsque le courant, tiré par la charge, est en dessous d'un seuil, un premier courant de sortie (IOUT), fourni à la charge (14) par le noeud de sortie du régulateur (12), est égal à un troisième courant (IBUCK, IBUCK1, IBUCK2) traversant le deuxième transistor (32, 34) et, lorsque ledit courant est au-dessus du seuil, le premier courant de sortie (IOUT) est égal à la somme d'un quatrième courant (IBAT) traversant le premier transistor (36) et du troisième courant (IBUCK, IBUCK1, IBUCK2) traversant le deuxième transistor (32, 34), le quatrième courant (IBAT) étant non nul, le deuxième circuit (26, 28, 89) de commande de grille comprenant un sixième transistor (104) relié en diode entre la deuxième sortie du convertisseur (92) et la sortie de la première alimentation à découpage (90), la borne de commande du sixième transistor (104) étant reliée à une sortie (96) du deuxième circuit de commande (26, 28, 89).

3. Dispositif selon la revendication 1 ou procédé selon la revendication 2, dans lequel le régulateur (12) est configuré pour que, lorsque le courant tirée par la charge est au-dessus du seuil, plus le courant tirée est important, plus le quatrième courant (IBAT) traversant le premier transistor (36) est important.

4. Dispositif selon la revendication 1 ou 3 ou procédé selon la revendication 2 ou 3, dans lequel le régulateur (12) comprend un pont diviseur de tension (50, 52) dont l'entrée est reliée au noeud de sortie (40) du régulateur (12) et dont la sortie est reliée à une entrée (54) de l'amplificateur (22) de manière à fournir la tension représentative de la tension de sortie (VFB).

5. Dispositif selon l'une quelconque des revendications 1, 3 ou 4 ou procédé selon l'une quelconque des revendications 2 à 4, dans lequel le convertisseur (24) comprend un troisième transistor (58) relié entre un premier noeud (62) et un noeud d'application d'une tension de référence (GND), le troisième transistor (58) étant configuré pour être commandé par la tension d'erreur, le convertisseur (24) comprenant un quatrième transistor (70) reliant le premier noeud (62) à la deuxième sortie (66) et au moins un cinquième (78, 86) transistor reliant le premier noeud (62) à la troisième sortie (74, 82).

6. Dispositif ou procédé selon la revendication 5, dans lequel le premier noeud (62) et la troisième sortie (74, 82) sont reliés par un ensemble d'au moins deux cinquièmes transistors (78, 86) reliés en parallèle.

7. Dispositif selon l'une quelconque des revendications 1, 3 à 6 ou procédé selon l'une quelconque des revendications 2 à 6, dans lequel le deuxième circuit de commande (26, 28, 89) comprend :

   - un septième transistor (98) relié en diode entre une entrée (94) configurée pour recevoir un courant de consigne (IREF) et la sortie de la première alimentation à découpage (90), et
   - un huitième transistor (102) relié entre la deuxième sortie du convertisseur (92) et la sortie de la première alimentation à découpage (90), la borne de commande du huitième transistor (102) étant reliée à la borne de commande du septième transistor (98).

8. Dispositif selon l'une quelconque des revendications 1, 3 à 7 ou procédé selon l'une quelconque des revendications 2 à 7, dans lequel le premier circuit de commande de grille (30) comprend un neuvième transistor (126) relié en diode, le neuvième transistor (126) et une résistance (128) étant reliés entre la première sortie du convertisseur (108) et première entrée du dispositif (16, 106), la borne de commande du neuvième transistor (126) étant reliée à une sortie (112) du premier circuit de commande (30).

9. Dispositif ou procédé selon la revendication 8, dans lequel le premier circuit de commande (30) comprend :

   - un dixième transistor (114) relié en diode entre une entrée (110) configurée pour recevoir un courant de consigne (IREF) et la première entrée du dispositif (16, 106), et
   - un onzième transistor (118) relié entre la première sortie du convertisseur (108) et la première entrée (16, 106) du dispositif, la borne de commande du dixième transistor (114) étant reliée à la borne de commande du onzième transistor (118).

10. Dispositif ou procédé selon la revendication 9, dans lequel le premier circuit (30) de commande comprend :

    - un douzième transistor (120) relié entre la première sortie (108) du convertisseur et la première entrée (16, 106) du dispositif ;
    - un premier interrupteur (122) relié entre la borne de commande du douzième transistor (120) et l'entrée (110) configurée pour recevoir le courant de consigne (IREF) ; et
    - un deuxième interrupteur (124) relié entre la borne de commande du douzième transistor (120) et la première entrée (16, 106) du dispositif.

11. Dispositif selon l'une quelconque des revendications 1, 3 à 10 ou procédé selon l'une quelconque des revendications 2 à 10, dans lequel le dispositif comprend au moins une deuxième alimentation à découpage (18, 20), et comprend, pour chaque deuxième alimentation à découpage (18, 20), un deuxième transistor (32, 34), relié entre la sortie de la deuxième alimentation à découpage correspondante et le noeud de sortie (40), le régulateur (12) étant configuré pour que seul un courant (IBUCK1, IBUCK2) traversant un des deuxièmes transistors soit non nul en même temps.

**Patentansprüche**

1. Eine elektronische Vorrichtung (10), das Folgendes aufweist:

   - einen ersten Versorgungseingang (16), der eingerichtet ist zum Empfangen einer ersten Versorgungsspannung (VDD);
   - ein erstes Schaltnetzteil (18, 20), das einen ersten Ausgang aufweist, wobei das erste Schaltnetzteil (18, 20) eingerichtet ist zum Erzeugen einer zweiten Versorgungsspannung (VBUCK, VBUCK1, VBUCK2) an dem ersten Ausgang; und
   - einen linearen Spannungsregler (12), der eingerichtet ist zum Versorgen einer Last (14), die in der Vorrichtung enthalten ist, wobei der Regler (12) eingerichtet ist zum Empfangen der ersten (VDD) und zweiten (VBUCK, VBUCK1, VBUCK2) Versorgungsspannungen, wobei der Regler (12) Folgendes aufweist:

○ einen ersten Transistor (36), der zwischen dem ersten Versorgungseingang (16) und einem Ausgangsknoten des Reglers (40) gekoppelt ist;

○ einen zweiten Transistor (32, 34), der zwischen dem Ausgang des ersten Schaltnetzteils (18, 20) und dem Ausgangsknoten des Reglers (40) gekoppelt ist;

○ einen Fehlerverstärker (22), der eingerichtet ist zum Empfangen einer Sollpunktspannung (VREF) als Eingang und einer Spannung (VFB), die für die Ausgangsspannung (VOUT) des Reglers repräsentativ ist, und der eingerichtet ist zum Erzeugen einer Fehlerspannung;

○ einen Spannungs-zu-Strom-Wandler (24), der einen Eingang aufweist, der eingerichtet ist zum Empfangen der Fehlerspannung, und der einen fünften Strom (IMBUCK, IMBUCK1, IMBUCK2) an einem zweiten Ausgang (66) des Wandlers (24) und einen sechsten Strom (IMBAT) an einem dritten Ausgang (74, 82) des Wandlers (24) erzeugt; und

○ eine erste Gate-Ansteuerungsschaltung (30), die den ersten Transistor (36) ansteuert, und eine zweite Gate-Ansteuerungsschaltung (26, 28), die den zweiten Transistor (32, 34) ansteuert, wobei der Wandler eingerichtet ist zum Liefern des fünften Stroms (IMBUCK, IMBUCK1, IMBUCK2) an die erste Ansteuerungsschaltung (30) und des sechsten Stroms (IMBAT) an die zweite Ansteuerungsschaltung (26, 28),

wobei der Regler (12) eingerichtet ist, so dass, wenn der von der Last gezogene Strom unterhalb eines Schwellenwerts liegt, ein erster Ausgangsstrom (IOUT), der an die Last (14) durch den Ausgangsknoten des Reglers (12) geliefert wird, gleich einem dritten Strom (IBUCK, IBUCK1, IBUCK2) ist, der durch den zweiten Transistor (32, 34) fließt, und so dass, wenn der Strom oberhalb des Schwellenwerts liegt, der erste Ausgangsstrom (IOUT) gleich der Addition eines vierten Stroms (IBAT), der durch den ersten Transistor (36) fließt, und des dritten Stroms (IBUCK, IBUCK1, IBUCK2) ist, der durch den zweiten Transistor (32, 34) fließt, wobei der vierte Strom (IBAT) nicht null ist, wobei die zweite Gate-Ansteuerungsschaltung (26, 28, 89) einen sechsten Transistor (104) aufweist, der dioden-geschaltet zwischen dem zweiten Ausgang des Wandlers (92) und dem Ausgang des ersten Schaltnetzteils (90) angeordnet ist, wobei der Ansteuerungsanschluss des sechsten Transistors (104) mit einem Ausgang (96) der zweiten Ansteuerungsschaltung (26, 28, 89) gekoppelt ist.

2. Ein Verfahren zum Steuern einer elektronischen Vorrichtung (10), das Folgendes aufweist:

- einen ersten Versorgungseingang (16), der eine erste Versorgungsspannung (VDD) empfängt;

- ein erstes Schaltnetzteil (18, 20), das einen ersten Ausgang aufweist, wobei das erste Schaltnetzteil (18, 20) eine zweite Versorgungsspannung (VBUCK, VBUCK1, VBUCK2) an dem ersten Ausgang erzeugt; und

- einen linearen Spannungsregler (12), der eine Last (14) versorgt, die in der Vorrichtung enthalten ist, wobei der Regler (12) die erste (VDD) und zweite (VBUCK, VBUCK1, VBUCK2) Versorgungsspannungen empfängt, wobei der Regler (12) Folgendes aufweist:

○ einen ersten Transistor (36), der zwischen dem ersten Versorgungseingang (16) und einem Ausgangsknoten des Reglers (40) gekoppelt ist;

○ einen zweiten Transistor (32, 34), der zwischen dem Ausgang des ersten Schaltnetzteils (18, 20) und dem Ausgangsknoten des Reglers (40) gekoppelt ist;

○ einen Fehlerverstärker (22), der eingerichtet ist zum Empfangen einer Sollpunktspannung (VREF) als Eingang und einer Spannung (VFB), die für die Ausgangsspannung (VOUT) des Reglers repräsentativ ist, und der eingerichtet ist zum Erzeugen einer Fehlerspannung;

○ einen Spannungs-zu-Strom-Wandler (24), der einen Eingang aufweist, der eingerichtet ist zum Empfangen der Fehlerspannung, und der einen fünften Strom (IMBUCK, IMBUCK1, IMBUCK2) an einem zweiten Ausgang (66) des Wandlers (24) und einen sechsten Strom (IMBAT) an einem dritten Ausgang (74, 82) des Wandlers (24) erzeugt; und

○ eine erste Gate-Ansteuerungsschaltung (30), die den ersten Transistor (36) ansteuert, und eine zweite Gate-Ansteuerungsschaltung (26, 28), die den zweiten Transistor (32, 34) ansteuert, wobei der Wandler eingerichtet ist zum Liefern des fünften Stroms (IMBUCK, IMBUCK1, IMBUCK2) an die erste Ansteuerungsschaltung (30) und des sechsten Stroms (IMBAT) an die zweite Ansteuerungsschaltung (26, 28),

wobei, wenn der von der Last gezogene Strom unterhalb eines Schwellenwerts liegt, ein erster Ausgangsstrom (IOUT), der an die Last (14) durch den Ausgangsknoten des Reglers (12) geliefert wird, gleich einem dritten Strom (IBUCK, IBUCK1, IBUCK2) ist, der durch den zweiten Transistor (32, 34) fließt, und wenn der Strom oberhalb des Schwellenwerts liegt, der erste Ausgangsstrom (IOUT) gleich der Addition eines vierten Stroms (IBAT), der durch den ersten Transistor (36) fließt, und des dritten Stroms (IBUCK, IBUCK1, IBUCK2) ist, der durch den zweiten Transistor (32, 34) fließt, wobei der vierte Strom (IBAT) nicht null ist, wobei die zweite Gate-Ansteuerungsschaltung (26, 28, 89) einen sechsten Transistor (104) aufweist, der dioden-geschaltet zwischen dem zweiten Ausgang des Wandlers (92) und dem Ausgang des ersten Schaltnetzteils (90) angeordnet ist, wobei der Ansteuerungsanschluss des sechsten Transistors (104) mit einem Ausgang (96) der zweiten Ansteuerungsschaltung (26, 28, 89) gekoppelt ist.

3. Die Vorrichtung nach Anspruch 1 oder das Verfahren nach Anspruch 2, wobei der Regler (12) eingerichtet ist, so dass, wenn der von der Last gezogene Strom oberhalb des Schwellenwerts liegt, der vierte Strom (IBAT) desto größer ist, je größer der gezogene Strom ist, der durch den ersten Transistor (36) fließt.

4. Die Vorrichtung nach Anspruch 1 oder 3 oder das Verfahren nach Anspruch 2 oder 3, wobei der Regler (12) eine Spannungsteilerbrücke (50, 52) aufweist, deren Eingang mit dem Ausgangsknoten (40) des Reglers (12) gekoppelt ist, und deren Ausgang mit einem Eingang (54) des Verstärkers (22) derart gekoppelt ist, dass die Spannung, die für die Ausgangsspannung repräsentativ ist (VFB), geliefert wird.

5. Die Vorrichtung nach einem der Ansprüche 1, 3 oder 4 oder das Verfahren nach einem der Ansprüche 2 bis 4, wobei der Wandler (24) einen dritten Transistor (58) aufweist, der zwischen einem ersten Knoten (62) und einem Knoten zum Anlegen einer Referenzspannung (GND) gekoppelt ist, wobei der dritte Transistor (58) eingerichtet ist zum Gesteuert-Werden durch die Fehlerspannung, wobei der Wandler (24) einen vierten Transistor (70) aufweist, der den ersten Knoten (62) mit dem zweiten Knoten (66) koppelt, und wenigstens einen fünften Transistor (78, 86), der den ersten Knoten (62) mit dem dritten Ausgang (74, 82) koppelt.

6. Die Vorrichtung oder das Verfahren nach Anspruch 5, wobei der erste Knoten (62) und der dritte Ausgang (74, 82) über eine Menge von wenigstens zwei fünften Transistoren (78, 86) gekoppelt sind, die parallel geschaltet sind.

7. Die Vorrichtung nach einem der Ansprüche 1, 3 bis 6 oder das Verfahren nach einem der Ansprüche 2 bis 6, wobei die zweite Ansteuerungsschaltung (26, 28, 89) Folgendes aufweist:

- einen siebten Transistor (98), der zwischen einem Eingang (94), der eingerichtet ist zum Empfangen eines Sollpunktstroms (IREF), und dem Ausgang des ersten Schaltnetzteils (90) dioden-geschaltet angeordnet ist, und
- einen achten Transistor (102), der zwischen dem zweiten Ausgang des Wandlers (92) und dem Ausgang des ersten Schaltnetzteils (90) gekoppelt ist, wobei der Ansteuerungsanschluss des achten Transistors (102) mit dem Ansteuerungsanschluss des siebten Transistors (98) gekoppelt ist.

8. Die Vorrichtung nach einem der Ansprüche 1, 3 bis 7 oder das Verfahren nach einem der Ansprüche 2 bis 7, wobei die erste Gate-Ansteuerungsschaltung (30) einen neunten dioden-geschalteten Transistor (126) aufweist, wobei der neunte Transistor (126) und ein Widerstand (128) zwischen dem ersten Ausgang des Wandlers (108) und dem ersten Eingang der Vorrichtung (16, 106) gekoppelt sind, wobei der Ansteuerungsanschluss des neunten Transistors (126) mit einem Ausgang (112) der ersten Ansteuerungsschaltung (30) gekoppelt ist.

9. Die Vorrichtung oder das Verfahren nach Anspruch 8, wobei die erste Ansteuerungsschaltung (30) Folgendes aufweist:

- einen zehnten Transistor (114), der zwischen einem Eingang (110), der eingerichtet ist zum Empfangen eines Sollpunktstroms (IREF), und dem ersten Eingang der Vorrichtung (16, 106) dioden-geschaltet angeordnet ist, und
- einen elften Transistor (118), der zwischen dem ersten Ausgang des Wandlers (108) und dem ersten Eingang (16, 106) der Vorrichtung gekoppelt ist, wobei der Ansteuerungsanschluss des zehnten Transistors (114) mit dem Ansteuerungsanschluss des elften Transistors (118) gekoppelt ist.

10. Die Vorrichtung oder das Verfahren nach Anspruch 9, wobei die erste Ansteuerungsschaltung (30) Folgendes aufweist:

- einen zwölften Transistor (120), der zwischen dem ersten Ausgang (108) des Wandlers und dem ersten Eingang (16, 106) der Vorrichtung gekoppelt ist;

- einen ersten Schalter (122), der zwischen dem Ansteuerungsanschluss des zwölften Transistors (120) und dem Eingang (110), der eingerichtet ist zum Empfangen des Sollpunktstroms (IREF), gekoppelt ist; und

- einen zweiten Schalter (124), der zwischen dem Ansteuerungsanschluss des zwölften Transistors (120) und dem ersten Eingang (16, 106) der Vorrichtung gekoppelt ist.

11. Die Vorrichtung nach einem der Ansprüche 1, 3 bis 10 oder das Verfahren nach einem der Ansprüche 2 bis 10, wobei die Vorrichtung wenigstens ein zweites Schaltnetzteil (18, 20) aufweist, und für jedes zweite Schaltnetzteil (18, 20) einen zweiten Transistor (32, 34) aufweist, der zwischen dem Ausgang des entsprechenden zweiten Schaltnetzteils und dem Ausgangsknoten (40) gekoppelt ist, wobei der Regler (12) eingerichtet ist, so dass nur ein Strom (IBUCK1, IBUCK2), der durch einen der zweiten Transistoren fließt, gleichzeitig nicht null ist.

## Claims

1. An electronic device (10) comprising:

   - a first supply input (16) configured to receive a first supply voltage (VDD);
   - a first switched-mode power supply (18, 20) comprising a first output, the first switched-mode power supply (18, 20) being configured to generate a second supply voltage (VBUCK, VBUCK1, VBUCK2) at the first output; and
   - a voltage linear regulator (12) configured to supply a load (14) included in the device, the regulator (12) being configured to receive the first (VDD) and second (VBUCK, VBUCK1, VBUCK2) supply voltages, the regulator (12) comprising:

      ○ a first transistor (36) coupled between the first supply input (16) and an output node of the regulator (40) ;
      ○ a second transistor (32, 34) coupled between the output of the first switched-mode power supply (18, 20) and the output node of the regulator (40);
      ○ an error amplifier (22) configured to receive as an input a set point voltage (VREF), and a voltage (VFB) representative of the output voltage (VOUT) of the regulator, and configured to generate an error voltage;
      ○ a voltage-to-current converter (24), comprising an input configured to receive the error voltage, and generating a fifth current (IMBUCK, IMBUCK1, IMBUCK2) at a second output (66) of the converter (24), and a sixth current (IMBAT) at a third output (74, 82) of the converter (24); and
      ○ a first gate-driving circuit (30) driving the first transistor (36), and a second gate-driving circuit (26, 28) driving the second transistor (32, 34), the converter being configured to deliver the fifth current (IMBUCK, IMBUCK1, IMBUCK2) to the first driving circuit (30), and the sixth current (IMBAT) to the second driving circuit (26, 28),

   the regulator (12) being configured so that, when the current, drawn by the load, is below a threshold, a first output current (IOUT), delivered to the load (14) by the output node of the regulator (12), is equal to a third current (IBUCK, IBUCK1, IBUCK2) flowing through the second transistor (32, 34), and so that, when said current is above the threshold, the first output current (IOUT) is equal to the addition of a fourth current (IBAT) flowing through the first transistor (36) and of the third current (IBUCK, IBUCK1, IBUCK2) flowing through the second transistor (32, 34), the fourth current (IBAT) being non-zero, the second gate-driving circuit (26, 28, 89) comprises a sixth transistor (104) diode-connected between the second output of the converter (92) and the output of the first switched-mode power supply (90), the driving terminal of the sixth transistor (104) being coupled to an output (96) of the second driving circuit (26, 28, 89).

2. A method for controlling an electronic device (10) comprising:

   - a first supply input (16) receiving a first supply voltage (VDD);
   - a first switched-mode power supply (18, 20) comprising a first output, the first switched-mode power supply (18, 20) generating a second supply voltage (VBUCK, VBUCK1, VBUCK2) at the first output; and
   - a voltage linear regulator (12) supplying a load (14) included in the device, the regulator (12) receiving the first (VDD) and second (VBUCK, VBUCK1, VBUCK2) supply voltages, the regulator (12) comprising:

      ○ a first transistor (36) coupled between the first supply input (16) and an output node of the regulator (40) ;
      ○ a second transistor (32, 34) coupled between the output of the first switched-mode power supply (18, 20) and the output node of the regulator (40);
      ○ an error amplifier (22) configured to receive as an input a set point voltage (VREF), and a voltage (VFB) representative of the output voltage (VOUT) of the regulator, and configured to generate an error voltage;

∘ a voltage-to-current converter (24), comprising an input configured to receive the error voltage, and generating a fifth current (IMBUCK, IMBUCK1, IMBUCK2) at a second output (66) of the converter (24), and a sixth current (IMBAT) at a third output (74, 82) of the converter (24); and

∘ a first gate-driving circuit (30) driving the first transistor (36), and a second gate-driving circuit (26, 28) driving the second transistor (32, 34), the converter being configured to deliver the fifth current (IMBUCK, IMBUCK1, IMBUCK2) to the first driving circuit (30), and the sixth current (IMBAT) to the second driving circuit (26, 28),

when the current, drawn by the load, is below a threshold, a first output current (IOUT), delivered to the load (14) by the output node of the regulator (12), is equal to a third current (IBUCK, IBUCK1, IBUCK2) flowing through the second transistor (32, 34), and when said current is above the threshold, the first output current (IOUT) is equal to the addition of a fourth current (IBAT) flowing through the first transistor (36) and of the third current (IBUCK, IBUCK1, IBUCK2) flowing through the second transistor (32, 34), the fourth current (IBAT) being non-zero, the second gate-driving circuit (26, 28, 89) comprises a sixth transistor (104) diode-connected between the second output of the converter (92) and the output of the first switched-mode power supply (90), the driving terminal of the sixth transistor (104) being coupled to an output (96) of the second driving circuit (26, 28, 89).

3. The device according to claim 1 or the method according to claim 2, wherein the regulator (12) is configured so that when the current drawn by the load is above the threshold, the greater the drawn current, the greater the fourth current (IBAT) flowing through the first transistor (36).

4. The device according to claim 1 or 3 or method according to claim 2 or 3, wherein the regulator (12) comprises a voltage dividing bridge (50, 52) the input of which is coupled to the output node (40) of the regulator (12), and the output of which is coupled to an input (54) of the amplifier (22) such a way to deliver the voltage representative of the output voltage (VFB).

5. The device according to any of claims 1, 3 or 4 or method according to any of claims 2 to 4, wherein the converter (24) comprises a third transistor (58) coupled between a first node (62) and a node for applying a reference voltage (GND), the third transistor (58) being configured to be controlled by the error voltage, the converter (24) comprising a fourth transistor (70) coupling the first node (62) to the second node (66) and at least one fifth transistor (78, 86) coupling the first node (62) to the third output (74, 82).

6. The device or method according to claim 5, wherein the first node (62) and the third output (74, 82) are coupled via a set of at least two fifth transistors (78, 86) connected in parallel.

7. The device according to any of claims 1, 3 to 6 or method according to any of claims 2 to 6, wherein the second driving circuit (26, 28, 89) comprises:

    - a seventh transistor (98) diode-connected between an input (94) configured to receive a set point current (IREF) and the output of the first switched-mode power supply (90), and
    - an eighth transistor (102) coupled between the second output of the converter (92) and the output of the first switched-mode power supply (90), the driving terminal of the eighth transistor (102) being coupled to the driving terminal of the seventh transistor (98).

8. The device according to any of claims 1, 3 to 7 or method according to any one of claims 2 to 7, wherein the first gate-driving circuit (30) comprises a ninth diode-connected transistor (126), the ninth transistor (126) and a resistor (128) being coupled between the first output of the converter (108) and the first input of the device (16, 106), the driving terminal of the ninth transistor (126) being coupled to an output (112) of the first driving circuit (30).

9. The device or method according to claim 8, wherein the first driving circuit (30) comprises:

    - a tenth transistor (114) diode-connected between an input (110) configured to receive a set point current (IREF) and the first input of the device (16, 106), and
    - an eleventh transistor (118) coupled between the first output of the converter (108) and the first input (16, 106) of the device, the driving terminal of the tenth transistor (114) being coupled to the driving terminal of the eleventh transistor (118).

10. The device or method according to claim 9, wherein the first driving circuit (30) comprises:

    - a twelfth transistor (120) coupled between the first output (108) of the converter and the first input (16, 106) of the device;
- a first switch (122) coupled between the driving terminal of the twelfth transistor (120) and the input (110) configured to receive the set point current (IREF); and
- a second switch (124) coupled between the driving terminal of the twelfth transistor (120) and the first input (16, 106) of the device.

11. The device according to any one of claims 1, 3 to 10, or the method according to any one of claims 2 to 10, wherein the device comprises at least one second switched-mode power supply (18, 20), and comprises for each second switched-mode power supply (18, 20), a second transistor (32, 34), coupled between the output of the corresponding second switched-mode power supply and the output node (40), the regulator (12) being configured so that only a current (IBUCK1, IBUCK2) flowing through one of the second transistors is non-zero at once.

# Fig. 1

# Fig. 2

**Fig. 3**

**Fig. 4**

# Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180284826 A
- CN 111742477
- US 20080084195 A
- US 20120292999 A